# EUROPÄISCHE PATENTSCHRIFT

(11) **EP 3 724 706 B1**
(45) Veröffentlichungstag und Bekanntmachung des Hinweises auf die Patenterteilung: **20.03.2024**
(21) Anmeldenummer: 18825599.6
(22) Anmeldetag: 11.12.2018
(51) Int. Cl.: G02B 6/44

(54) **SPLEISSVERTEILER MIT SPLEISSABLAGE**
SPLICE DISTRIBUTOR HAVING A SPLICE COMPARTMENT
DISTRIBUTEUR À ÉPISSURES COMPRENANT UNE CASSETTE D'ÉPISSURES

(30) Priorität: 12.12.2017 DE 102017129646
(43) Veröffentlichungstag der Anmeldung: 21.10.2020
(73) Patentinhaber: Phoenix Contact GmbH & Co. KG, 32825 Blomberg (DE)
(72) Erfinder: MANZULA, Evgenij, 33619 Bielefeld (DE); KÖLSKE, Frank, 48317 Drensteinfurt (DE); POLOZUN, Vladimir, 31868 Ottenstein (DE)
(74) Vertreter: Meyer-Graefe, Karsten
(86) Internationale Anmeldenummer: PCT/EP2018/084354
(87) Internationale Veröffentlichungsnummer: WO 2019/115523

(56) Entgegenhaltungen:
- EP-A1- 2 365 364
- EP-A1- 2 383 594
- WO-A1-2017/001893
- DE-U1- 29 901 046
- FR-A1- 3 032 533
- US-A1- 2009 202 214
- US-A1- 2017 045 699
- US-A1- 2017 153 407

## Beschreibung

Die Erfindung betrifft einen Spleißverteiler mit einer Spleißablage, die in einem Gehäuse des Spleißverteilers angeordnet ist.

Spleißverteiler werden verwendet, um die Lichtwellenleiter eines mehradrigen Glasfaserkabels aufzufächern und so ein Anschließen der einzelnen Lichtwellenleiter zu ermöglichen. Eine Spleißablage dient dabei zur geschützten Ablage eines Verbindungsbereichs zwischen den Lichtwellenleitern eines eingehenden Glasfaserkabels und damit jeweils durch optisches Schweißen (sog. Spleißen) verbundenen Anschlusslichtwellenleitern (sog. Pigtails).

Ein Spleißverteiler ist beispielsweise in der EP 2 365 364 A1 beschrieben. Der Spleißverteiler umfasst ein Gehäuse mit mehreren Eingangsöffnungen und Anschlussöffnungen, sowie eine in dem Gehäuse angeordnete Spleißablage. Die Spleißablage weist unter anderem ein Kabelhalteteil zur Befestigung eines Kabels auf.

Wie in der EP 0 581 306 A1 beschrieben, können in dem Gehäuse eines Spleißverteilers Führungselemente vorgesehen sein, die ein Verlegen der Lichtwellenleiter in dem Gehäuse, beispielsweise nach dem Spleißen der optischen Fasern, erleichtern.

Bei der in der EP 0 581 306 A1 beschriebenen Technik können sich jedoch Schwierigkeiten daraus ergeben, dass die Lichtwellenleiter auf dem Gehäuseboden in einer Ebene zwischen den Anschlüssen in Schleifen verlegt sind. Dadurch sind eine kompakte Ausführung sowie eine Handhabung des Spleißverteilers besonders bei einer Verwendung mit vieladrigen Glasfaserkabeln erschwert.

Die DE 29 901 046 U1 beschreibt dagegen einen Spleißverteiler für Verbindungen zwischen den einzelnen Lichtwellenleitern eines eingehenden Glasfaserkabels und jeweils einem mit einer Steckkupplung vorkonfektionierten Anschlusslichtwellenleiter, d.i. ein sogenannter Pigtail. Dabei ist eine Halterung für die Verbindungsbereiche zwischen den Lichtwellenleitern auf einer Ablage oberhalb des Kabeleingangs sowie der Anschlüsse vorgesehen.

Bei Spleißverteilern der in der DE 29 901 046 U1 beschriebenen Art können sich jedoch bei einer Verwendung mit vieladrigen Glasfaserkabeln Schwierigkeiten daraus ergeben, dass die Lichtwellenleiter mehrfach zwischen verschiedenen Ebenen hin und her geführt werden. Dies erschwert es, den Spleißverteiler raumsparend auszubilden, ohne gleichzeitig eine Handhabung bei einer Verwendung mit vieladrigen Kabeln zu beeinträchtigen oder eine unerwünscht hohe Bruchgefahr für die Lichtwellenleiter zu bewirken.

Aufgabe der vorliegenden Erfindung ist es daher, einen Spleißverteiler zur Verfügung zu stellen, der eine raumsparende Ausführung und eine einfache Handhabung ermöglicht, und bei dem gleichzeitig die Gefahr einer Beschädigung darin verbundener Lichtwellenleiter verringert ist.

Diese Aufgabe wird durch einen Gegenstand mit den Merkmalen des Anspruchs 1 gelöst.

Demnach weist das Gehäuse des Spleißverteilers wenigstens eine Eingangsöffnung zur Aufnahme eines Eingangskabels auf, das wenigstens einen Eingangslichtwellenleiter umfasst, und wenigstens eine Anschlussöffnung zur Aufnahme eines Anschlusslichtwellenleiters, der mit dem Eingangslichtwellenleiter in dem Gehäuse lichtleitend verbunden ist, wobei die Eingangsöffnung zumindest teilweise oberhalb einer Oberseitenebene einer Spleißablage des Spleißverteilers angeordnet ist und die Anschlussöffnung unterhalb der Oberseitenebene der Spleißablage angeordnet ist. Die Spleißablage weist eine Befestigungseinrichtung zum Festlegen eines den wenigstens einen Eingangslichtwellenleiter führenden Mantelrohrs des Eingangskabels auf. Die Spleißablage ist mittels eines reversiblen Befestigungsmittels lösbar an dem Gehäuse befestigt. Die Spleißablage weist einen Befestigungsbereich auf, der unterhalb der Oberseitenebene der Spleißablage angeordnet ist und an dem das reversible Befestigungsmittel zur Befestigung an dem Gehäuse angeordnet ist. Weiter ist wenigstens eine Rampe vorgesehen, die sich zwischen der Oberseitenebene der Spleißablage und einem Bereich unterhalb der Spleißablage erstreckt und die als Führung für den Anschlusslichtwellenleiter zwischen der Oberseite der Spleißablage und dem Bereich unterhalb der Spleißablage vorgesehen ist, wobei die Rampe als Teil der Spleißablage ausgebildet ist, die Rampe an den Befestigungsbereich angeformt ist und sich von dem unterhalb der Oberseitenebene angeordneten Befestigungsbereich schräg zur Höhenrichtung nach unten, also von der Spleißablage weg erstreckt.

Die Eingangsöffnung, die das Eingangskabel beispielsweise dadurch aufnimmt, dass das Eingangskabel durch die Eingangsöffnung hindurchgeführt ist, ist somit zumindest teilweise oberhalb einer Oberseitenebene der Spleißablage des Spleißverteilers angeordnet. Die Oberseitenebene ist durch die Oberseite der Spleißablage definiert, auf der ein oder mehrere Eingangslichtwellenleiter des Eingangskabels aufgenommen werden. Die Eingangsöffnung ist hierbei insbesondere oberhalb angrenzend an die Oberseitenebene derart an dem Gehäuse geformt, dass ein in dem Eingangskabel geführtes Mantelrohr - ohne Krümmung in einer Richtung senkrecht zur Oberseitenebene - hin zur Oberseite der Spleißablage geführt und dort gegebenenfalls befestigt werden kann, sodass in dem Mantelrohr geführte Eingangslichtwellenleiter nicht oder gegebenenfalls nur geringfügig, vorzugsweise aber nicht in mehrere unterschiedliche Krümmungsrichtungen gekrümmt werden müssen.

Die mit den Anschlusslichtwellenleitern zu verbindenden Eingangslichtwellenleiter werden an der (durch einen flächigen Boden der Spleißablage ausgebildeten) Oberseite der Spleißablage aufgenommen. Die Oberseite definiert hierbei die Oberseitenebene. Darunter, dass die Eingangsöffnung zumindest teilweise oberhalb der Oberseitenebene der Spleißablage und die wenigstens eine Anschlussöffnung unterhalb der Oberseitenebene der Spleißablage angeordnet ist, ist vorliegend zu verstehen, dass sich die Eingangsöffnung zumindest teilweise - betrachtet entlang einer Höhenrichtung senkrecht zur Oberseitenebene - an einer ersten, oberen Seite der Spleißablage (nämlich des die Oberseite ausbildenden Flächenabschnitts der Spleißablage) erstreckt, während die wenigstens eine Anschlussöffnung an einer der ersten Seite abgewandten, zweiten, unteren Seite der Spleißablage angeordnet ist. An der ersten, oberen Seite kann die Spleißablage den wenigstens einen Eingangslichtwellenleiter eines an der Eingangsöffnung aufgenommenen Eingangskabels aufnehmen, wobei der wenigstens eine Eingangslichtwellenleiter mit wenigstens einem Anschlusslichtwellenleiter verbunden und von der ersten, oberen Seite der Spleißablage hin zur zweiten, unteren Seite zur wenigstens einen Anschlussöffnung unterhalb der Oberseitenebene der Spleißablage geführt wird.

Ein an dem Gehäuse des Spleißverteilers aufgenommenes Eingangskabel erstreckt sich vorzugsweise durch die Eingangsöffnung hindurch und zumindest mit seinem Mantelrohr bis hin zur Spleißablage, sodass in dem Mantelrohr eingefasste Eingangslichtwellenleiter von der Eingangsöffnung hin zu der Spleißablage spannungsfrei geführt und dort aufgenommen werden.

Erfindungsgemäß weist die Spleißablage zumindest eine Befestigungseinrichtung zum Festlegen eines den wenigstens einen Eingangslichtwellenleiter führenden Mantelrohrs des Eingangskabels auf. Mittels einer solchen Befestigungseinrichtung kann das Mantelrohr zu der Spleißablage festgelegt werden, beispielsweise unter Verwendung von an der Befestigungseinrichtung angeordneten Kabelbindern oder mittels einer Schraubbefestigung oder dergleichen.

Der Anschlusslichtwellenleiter kann einen Lichtwellenleiterabschnitt umfassen, der an einem Ende mit einem Stecker vorkonfektioniert ist. Außerdem kann der Anschlusslichtwellenleiter bezüglich einer Länge des Lichtwellenleiterabschnitts vorkonfektioniert sein. Der Anschlusslichtwellenleiter kann einen Pigtail umfassen. Bei einer Verwendung des Spleißverteilers kann das offene Ende des Anschlusslichtwellenleiters auf die Spleißablage geführt werden, um das offene Ende anschließend mit dem Eingangslichtwellenleiter zu verbinden.

Die Aufnahme des Eingangskabels kann ein Hindurchführen des Eingangskabels durch die Eingangsöffnung umfassen. Zusätzlich oder alternativ dazu kann die Aufnahme des Eingangskabels ein Befestigen des Eingangskabels an dem Gehäuse mittels einer Kabelverschraubung umfassen. Die Aufnahme des Anschlusslichtwellenleiters kann ein Hindurchführen des Anschlusslichtwellenleiters durch die Anschlussöffnung umfassen. Zusätzlich oder alternativ dazu kann die Aufnahme des Anschlusslichtwellenleiters ein Befestigen des Anschlusslichtwellenleiters an der Anschlussöffnung, insbesondere mittels einer Steckbuchse, die an der Anschlussöffnung angeordnet ist, umfassen.

Die Spleißablage kann an wenigstens 50 Prozent eines Umfangs der Spleißablage eine Umrandung aufweisen. Insbesondere kann die Spleißablage die Umrandung an wenigstens 80 Prozent ihres Umfangs aufweisen. Die Umrandung kann einen Randbereich der Oberseite der Spleißablage wenigstens teilweise überragen. Die Umrandung kann zur horizontalen und/oder vertikalen Führung des Eingangslichtwellenleiters und/oder des Anschlusslichtwellenleiters vorgesehen sein. Eine solche Umrandung kann beispielsweise an eine Befestigungseinrichtung zum Festlegen des Mantelrohrs des Eingangskabels an der Spleißablage anschließen, sodass aus dem Mantelrohr austretende Eingangslichtwellenleiter durch die Umrandung umfänglich an der Spleißablage geführt werden können.

Der Spleißverteiler kann wenigstens einen Spleißhalter umfassen, der an der Oberseite der Spleißablage angeordnet ist. Der Spleißhalter kann zur Aufnahme des Verbindungsbereichs vorgesehen sein. Dabei kann der Spleißhalter zur Aufnahme und Fixierung der geschützten Spleißverbindung vorgesehen sein.

Die Spleißablage ist erfindungsgemäß mittels eines reversiblen Befestigungsmittels lösbar an dem Gehäuse befestigt. Insbesondere kann die Spleißablage mittels nur eines reversiblen Befestigungsmittels an dem Gehäuse befestigt sein. Das reversible Befestigungsmittel kann eine Schraube umfassen.

Erfindungsgemäß weist die Spleißablage zur Befestigung an dem Gehäuse einen Befestigungsbereich auf. Der Befestigungsbereich ist unterhalb der Oberseitenebene der Spleißablage angeordnet, ist also gegenüber der Oberseitenebene abgesenkt und ist beispielsweise einstückig mit der Spleißablage geformt. An dem Befestigungsbereich kann das reversible Befestigungsmittel, zum Beispiel in Form einer Schraube, angeordnet werden, um die Spleißablage (lösbar) mit dem Gehäuse zu verbinden.

Dadurch, dass der Befestigungsbereich unterhalb der Oberseitenebene der Spleißablage angeordnet ist, wird verhindert, dass der Befestigungsbereich und ein daran angeordnetes Befestigungsmittel mit einem Eingangskabel, insbesondere dem Mantelrohr und darin geführten Eingangslichtwellenleitern, kollidieren kann, was ansonsten gegebenenfalls zu einer Quetschung oder Krümmung an den Eingangslichtwellenleitern des Eingangskabels führen könnte. Der Befestigungsbereich, zum Beispiel in Form einer von der Spleißablage vorstehenden, gegenüber der Oberseitenebene abgesenkten Lasche, ist somit räumlich (entlang der senkrecht zur Oberseitenebene erstreckten Höhenrichtung) von der Oberseite der Spleißablage, an der die Eingangslichtwellenleiter aufzunehmen sind, getrennt.

Der Befestigungsbereich kann dazu ausgebildet sein, an einer Auflagelasche, die an einer Innenseite des Gehäuses angeordnet ist, befestigt zu werden. Dabei kann der Befestigungsbereich dazu ausgebildet sein, an der Auflagelasche mittels nur einer Schraube angeschraubt zu werden. Der Spleißverteiler kann zur Auflage der Spleißablage ferner wenigstens zwei Seitenauflagen umfassen, die an verschiedenen Seiten in dem Gehäuse angeordnet sind. Die Seitenauflagen und die Auflagelasche können eine Dreipunktauflage für die Spleißablage bilden. Außerdem kann die Spleißablage wenigstens zwei Stecklaschen umfassen. Jede der Stecklaschen kann dazu ausgebildet sein, in eine Steckaufnahme jeweils einer der Seitenauflagen zu greifen, wenn die Spleißablage an dem Gehäuse befestigt ist. Dies kann eine stabile Anordnung der Spleißablage in dem Gehäuse begünstigen, insbesondere bei einer Befestigung der Spleißablage an dem Gehäuse mittels nur eines reversiblen Befestigungsmittels. Zudem lässt sich so eine mechanische Stabilität des Spleißverteilers, insbesondere durch Bilden einer Verstrebung des Gehäuses mittels der Spleißablage, erhöhen.

Der Spleißverteiler umfasst erfindungsgemäß wenigstens eine Rampe, die sich zwischen der Oberseitenebene der Spleißablage und einem Bereich unterhalb der Spleißablage erstreckt. Die Rampe ist als Führung für den Anschlusslichtwellenleiter zwischen der Oberseite der Spleißablage und dem Bereich unterhalb der Spleißablage vorgesehen. Die Rampe ist an den Befestigungsbereich angeformt und erstreckt sich von dem (unterhalb der Oberseitenebene angeordneten) Befestigungsbereich schräg zur Höhenrichtung nach unten, also von der Spleißablage weg. Auf diese Weise ist auch die Rampe räumlich getrennt von der Oberseite der Spleißablage, sodass eine Kollision der Rampe und daran geführten Lichtwellenleitern mit einem an der Eingangsöffnung aufgenommenen und hin zur Spleißablage geführten Eingangskabel vermieden ist.

Die Rampe ist als Teil der Spleißablage ausgebildet. Dabei kann die Rampe angrenzend an den Befestigungsbereich der Spleißablage angeordnet sein. Zudem kann die Rampe in Bezug auf die Oberseite der Spleißablage in einer abgesenkten Position angeordnet sein.

Der Spleißverteiler kann wenigstens ein Befestigungselement umfassen, das in einem Bereich der Eingangsöffnung in dem Gehäuse angeordnet ist und das zur Befestigung wenigstens eines Innenelements des Eingangskabels vorgesehen ist. Das Befestigungselement kann unterhalb der Oberseitenebene der Spleißablage angeordnet sein. Außerdem kann das Befestigungselement von einem Boden des Gehäuses beabstandet angeordnet sein. Das Befestigungselement kann mittels eines reversiblen Befestigungsmittels lösbar an dem Gehäuse befestigt sein. Das Befestigungsmittel kann eine Schraube und eine Blindnietmutter umfassen. Das Befestigungselement kann hierbei unter Verwendung der Befestigungsmittels insbesondere klemmend mit einem zugeordneten Innenelement des Eingangskabels in Verbindung gebracht werden, sodass über das Befestigungselement das Innenelement klemmend zu dem Gehäuse festgelegt und somit auf Zug belastbar mit dem Gehäuse verbunden wird.

In einer Ausgestaltung kann der Spleißverteiler beispielsweise zwei Befestigungselemente aufweisen, über die zwei Innenelemente, zum Beispiel einerseits in Form eines Mantelgeflechts (zum Beispiel eines Kevlar- oder Glasfasergeflechts) des Eingangskabels und andererseits in Form eines in dem Eingangskabel eingefassten Zugelements (in Form einer Faser, zum Beispiel einer Kunststoff- oder Glasfaser), zu dem Gehäuse festgelegt werden können. Über die zwei Befestigungselemente kann somit eine zweifache Zugentlastung zur zugfesten Verbindung des Eingangskabels mit dem Gehäuse bereitgestellt werden, wobei die Befestigungselemente beispielsweise jeweils klemmend auf das zugeordnete Innenelement Element einwirken und dieses somit auf Zug belastbar zu dem Gehäuse festlegen.

Das Gehäuse kann wenigstens zwei Eingangsöffnungen aufweisen, die an verschiedenen Seiten des Gehäuses angeordnet sind. Dabei kann der Spleißverteiler wenigstens zwei Befestigungselemente und wenigstens zwei Rampen umfassen. Insbesondere können die Eingangsöffnungen an gegenüberliegenden Seiten des Gehäuses angeordnet sein. Dabei können die Befestigungselemente und die Rampen in Bezug auf eine Gehäuseebene zwischen den Eingangsöffnungen zumindest im Wesentlichen symmetrisch in dem Gehäuse angeordnet sein. Diese Konstellation ermöglicht nicht nur das Einführen eines Kabels von unterschiedlichen Gehäuseseiten, sondern beispielsweise auch Kabelanschlussanwendungen unter Verwendung mehrerer zu verbindender Kabel (z.B. eine 2-Kabel-Lösung, wie insbesondere eine sogenannte Drop-Insert-, eine Going-Through-Lösung oder eine Intrusions-Lösung).

Bei einer sogenannten 2-Kabel-Lösung werden zwei Kabel von unterschiedlichen Seiten in das Gehäuse eingeführt. Die Eingangslichtwellenleiter der Kabel werden jeweils an der Spleißablage geführt und miteinander und/oder mit Anschlusslichtwellenleitern verbunden.

So werden zum Beispiel bei einer sogenannten Drop-Insert-Lösung zwei Kabel von unterschiedlichen Seiten in das Gehäuse eingeführt. Die Eingangslichtwellenleiter werden jeweils an der Spleißablage geführt. Einige Eingangslichtwellenleiter der Kabel werden hierbei miteinander verbunden und somit zusammengespleißt, andere Eingangslichtwellenleiter werden mit Anschlusslichtwellenleitern verbunden und damit von den Eingangskabeln abgezweigt.

Bei einer anderen Ausgestaltung einer 2-Kabel-Lösung im Sinne einer sogenannten Going-Through-Lösung werden zwei Kabel von unterschiedlichen Seiten in das Gehäuse eingeführt. Die Eingangslichtwellenleiter der Kabel können auf der Spleißablage geführt und miteinander verbunden werden, indem die Kabel zusammengespleißt werden. In diesem Fall werden die Kabel somit nicht mit Anschlusslichtwellenleitern, sondern miteinander verbunden.

Bei einer wiederum anderen Ausgestaltung einer 2-Kabel-Lösung im Sinne einer sogenannten Intrusions-Lösung wird ein Kabel durch zwei Eingangsöffnungen hindurchgeführt. Im Inneren des Gehäuses ist hierbei die Ummantelung des Kabels entfernt, und ein oder mehrere (aber nicht alle) Eingangslichtwellenleiter sind aus dem Mantelrohr herausgeführt und mit zugeordneten Anschlusslichtwellenleitern verbunden.

Der Spleißverteiler kann mehrere Anschlussöffnungen aufweisen. Dabei kann der Spleißverteiler mehr als 5 Anschlussöffnungen aufweisen. Insbesondere kann der Spleißverteiler 12 Anschlussöffnungen aufweisen. Die wenigstens eine Anschlussöffnung kann zudem zur Aufnahme des Anschlusslichtwellenleiters mit wenigstens einer Steckbuchse versehen sein. Insbesondere kann jede der Anschlussöffnungen mit zwei Steckbuchsen versehen sein. Die Steckbuchse kann zur Bildung einer Steckverbindung mit dem Stecker des Anschlusslichtwellenleiters ausgebildet sein. Die Steckbuchse kann zudem dazu vorgesehen sein, einen Anschluss des Anschlusslichtwellenleiters aus dem Gehäuse des Spleißverteilers zu führen.

Die Spleißablage kann in Bezug auf eine Mittelebene der Spleißablage zumindest im Wesentlichen symmetrisch ausgebildet sein.

Das Gehäuse kann an wenigstens einer der Eingangsöffnungen einen entfernbaren Verschluss aufweisen.

Das Gehäuse kann eine Gehäusekassette und einen Gehäusedeckel umfassen. Dabei kann der Gehäusedeckel mittels wenigstens eines reversiblen Befestigungsmittels an der Gehäusekassette lösbar befestigt sein.

Der Spleißverteiler kann eine Hutschienenaufnahme umfassen. Die Hutschienenaufnahme kann an einer Außenseite des Gehäusedeckels angeordnet sein.

Eine Baugruppe umfasst beispielsweise einen Spleißverteiler und ein daran angeordnetes Eingangskabel. Das Eingangskabel umfasst beispielsweise ein Mantelrohr und wenigstens einen in dem Mantelrohr geführten Eingangslichtwellenleiter. Beispielsweise kann das Eingangskabel mit einer Ummantelung an der Eingangsöffnung des Spleißverteilers aufgenommen und mit der Ummantelung an dem Gehäuse festgelegt sein. Zwischen der Eingangsöffnung und der Spleißablage erstreckt sich das Mantelrohr, das somit den in dem Mantelrohr geführten, wenigstens einen Eingangslichtwellenleiter hin zur Spleißablage führt und beispielsweise über eine Befestigungseinrichtung, zum Beispiel unter Verwendung von Kabelbindern, an der Spleißablage festgelegt ist.

Weitere Merkmale, Aufgaben und Vorzüge der Erfindung werden aus den Zeichnungen und der ausführlichen Beschreibung deutlich. Es zeigen:
- Fig. 1: eine schematische Darstellung eines Spleißverteilers gemäß einem Ausführungsbeispiel;
- Fig. 2: eine schematische Darstellung eines Spleißverteilers mit geöffnetem Gehäuse und darin verbundenen Lichtwellenleitern gemäß einem Beispiel;
- Fig. 3: eine schematische Darstellung einer Gehäusekassette eines Spleißverteilers gemäß einem Beispiel;
- Fig. 4: eine schematische Darstellung einer Gehäusekassette eines Spleißverteilers mit darin angeordneten Anschlusslichtwellenleitern gemäß einem Beispiel;
- Fig. 5: eine schematische Darstellung einer Spleißablage und zweier Befestigungselemente eines Spleißverteilers gemäß einem Beispiel;
- Fig. 6: eine schematische Darstellung eines Spleißverteilers mit geöffnetem Gehäuse und darin verbundenen Lichtwellenleitern gemäß einem weiteren Beispiel;
- Fig. 7: eine schematische Darstellung eines Gehäusedeckels und zweier Befestigunsmittel eines Spleißverteilers gemäß einem Beispiel;
- Fig. 8: eine schematische Darstellung eines Spleißverteilers gemäß einem weiteren Beispiel;
- Fig. 9: eine schematische Darstellung einer Spleißablage eines Spleißverteilers gemäß einem weiteren Beispiel, und
- Fig. 10: eine schematische Darstellung eines Spleißverteilers mit geöffnetem Gehäuse und darin verlegten Lichtwellenleitern gemäß einem weiteren Beispiel.

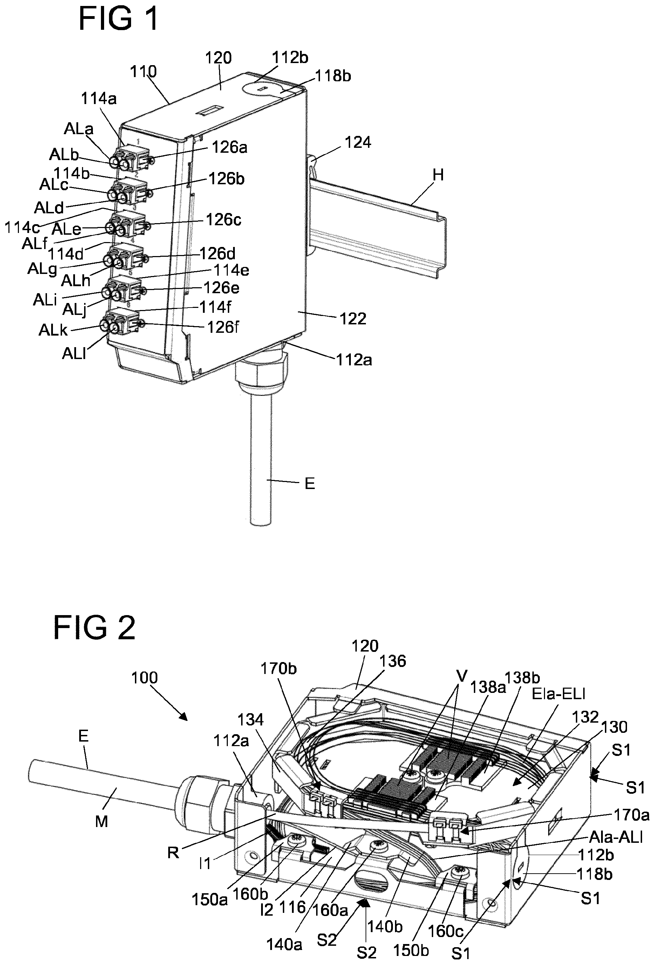

Fig. 1 zeigt eine schematische Darstellung eines Spleißverteilers 100 gemäß einem Ausführungsbeispiel. Der Spleißverteiler 100 umfasst ein Gehäuse 110 mit einer Gehäusekassette 120 und einem Gehäusedeckel 122. Das Gehäuse 110 weist an verschiedenen Seiten der Gehäusekassette 120 Eingangsöffnungen 112a, 112b zur Aufnahme eines Eingangskabels E auf. In dem gezeigten Beispiel handelt es sich bei dem Eingangskabel E um ein mehradriges Glasfaserkabel, das in der Eingangsöffnung 112a aufgenommen und mittels einer Kabelverschraubung an dem Gehäuse 110 befestigt ist. Die weitere Eingangsöffnung 112b ist in dem gezeigten Beispiel mittels eines entfernbaren Verschlusses 118b verschlossen.

Der Spleißverteiler 100 umfasst zudem mehrere Anschlussöffnungen 114a-114f zur Aufnahme von jewe)sils wenigstens einem Anschlusslichtwellenleiter. In dem gezeigten Beispiel umfasst der Spleißverteiler 100 sechs Anschlussöffnungen 114a-114f, die jeweils zur Aufnahme von zwei Anschlusslichtwellenleitern vorgesehen sind. Dazu ist in dem gezeigten Beispiel jede der Anschlussöffnungen 114a-114f mit einer Steckbuchse 126a-126f versehen.

In dem gezeigten Beispiel weist das Gehäuse 110 an seiner Rückseite eine Hutschienenaufnahme 124 auf, mittels deren der Spleißverteiler 100 an einer Hutschiene H befestigt werden kann.

Vorliegend ist der Spleißverteiler 100 als ein Verteiler für ein mehradriges Eingangskabel beschrieben. Dies soll jedoch nicht beschränkend verstanden werden bezüglich einer Durchtrittsrichtung von Lichtsignalen durch den Spleißverteiler 100. Beispielsweise kann der Spleißverteiler 100 bei Lichtsignalen, die aus Richtung der Anschlussöffungen 114a-114f in das Gehäuse 110 eintreten, als Vereiniger fungieren. Es versteht sich, dass die beschriebenen Vorteile der Erfindung unabhängig von einer Durchtrittsrichtung der Lichtsignale erzielbar sind.

Fig. 2 zeigt eine schematische Darstellung des Spleißverteilers 100 aus Fig. 1, wobei der Gehäusedeckel 122 einschließlich der daran befestigten Hutschienenaufnahme 124 von der Gehäusekassette 120 entfernt ist. Innerhalb der Gehäusekassette 120 ist eine Spleißablage 130 des Spleißverteilers 100 erkennbar. Die Oberseite 132 der Spleißablage 130 definiert eine Oberseitenebene S1 innerhalb der Gehäusekassette 120. Dabei ist die Spleißablage 130 derart angeordnet, dass die Eingangsöffnungen 112a, 112b oberhalb an die Oberseitenebene S1 der Spleißablage 130 angrenzen. Die Spleißablage 130 ist außerdem derart angeordnet, dass sich die Anschlussöffnungen 114a-114f unterhalb der Oberseitenebene S1 der Spleißablage 130 befinden.

Eingangslichtwellenleiter ELa-ELI des Eingangskabels E und Anschlusslichtwellenleiter ALa-ALI, die in den Anschlussöffnungen 114a-114f des Spleißverteilers 100 aufgenommen sind, sind in Verbindungsbereichen V miteinander lichtleitend verbunden. Dazu sind die den Anschlussöffnungen 114a-114f entgegengesetzten Enden der Anschlusslichtwellenleiter ALa-ALI von dem Bereich unterhalb der Spleißablage 130 zu der Oberseite 132 der Spleißablage 130 geführt. Auf der Oberseite 132 der Spleißablage 130 sind zudem zwei Spleißhalter 138a, 138b zum Fixieren der Verbindungsbereiche V angeordnet.

Durch die dargestellte Anordnung der Eingangsöffnungen 112a, 112b und der Spleißablage 130 ist vermieden, dass die Eingangslichtwellenleiter ELa-ELI des Eingangskabels E auf eine außerhalb ihrer Eingangsebene liegende Spleißablage gelenkt werden müssen. Hierdurch lassen sich Krümmungen des Eingangslichtwellenleiterbündels in verschiedene Richtungen vermeiden. Wie in Fig. 2 zudem gezeigt, ermöglicht diese Anordnung, dass ein zum Schutz der Eingangslichtwellenleiter ELa-ELI in dem Eingangskabel E vorgesehenes Mantelrohr R ohne übermäßige Materialbelastung bis auf die Spleißablage 130 geführt werden kann. Dies begünstigt einen Schutz der Eingangslichtwellenleiter ELa-ELI innerhalb des Gehäuses 110 und vereinfacht eine Handhabung des Spleißverteilers 100, besonders bezüglich eines Verlegens der Lichtwellenleiter in der Gehäusekassette 120.

Bei dem dargestellten Ausführungsbeispiel umfasst die Spleißablage 130 Befestigungseinrichtungen 170a, 170b, die von der Oberseite 132 als Abkantungen vorstehen und über die eine Festlegung des Mantelrohrs R des Eingangskabels E an der Spleißablage 130 vorgenommen werden kann. Bei der Anordnung gemäß Fig. 2 ist entsprechend das Mantelrohr R des Eingangskabels E an der in Fig. 2 rechts dargestellten Befestigungseinrichtung 170a über Kabelbinder festgelegt, sodass das Mantelrohr R zwischen der Eingangsöffnung 112a und der Spleißablage 130 spannungsfrei erstreckt und über die Befestigungseinrichtung 170a an der Spleißablage 130 festgelegt ist.

Dass Eingangskabel E umfasst eine Ummantelung M, die im Bereich der Eingangsöffnung 112a an dem Gehäuse 110 festgelegt ist und im Bereich der Eingangsöffnung 112a endet. Zwischen der Eingangsöffnung 112a und der Spleißablage 132 erstreckt sich das (außerhalb des Spleißverteilers 100 in der Ummantelung M eingefasste) Mantelrohr R frei und führt die darin eingefassten Eingangslichtwellenleiter ELa-ELI von der Eingangsöffnung 112a hin zu der Spleißablage 130.

Das Verlegen der Eingangslichtwellenleiter ELa-ELI und der Anschlusslichtwellenleiter ALa-ALI weitgehend in voneinander getrennten Bereichen gestattet eine einfache Handhabung des Spleißverteilers 100, besonders bei einer Verwendung mit vieladrigen Eingangskabeln E. Zugleich ist eine Bruchgefahr für die Lichtwellenleiter reduziert. Dies ermöglicht insbesondere eine kompakte Ausführung des Spleißverteilers 100 auch für vieladrige Eingangskabel und deren Auffächern auf eine Vielzahl von Anschlüssen.

In dem gezeigten Beispiel ist der Spleißverteiler 100 zur Verwendung mit vorkonfektionierten Anschlusslichtwellenleitern ALa-ALI, die jeweils an einem Ende mit einem Stecker versehen sind, d. h. sogenannte Pigtails, vorgesehen. Zudem umfasst beispielsweise jeder der vorkonfektionierten Anschlusslichtwellenleiter ALa-ALI einen Lichtwellenleiterabschnitt vorbestimmter Länge. Die Abmessungen des Spleißverteilers 100 sowie der beschriebenen Komponenten können dabei auf eine Anzahl vorgesehener Anschlüsse und die zu verwendenden Pigtails abgestimmt sein.

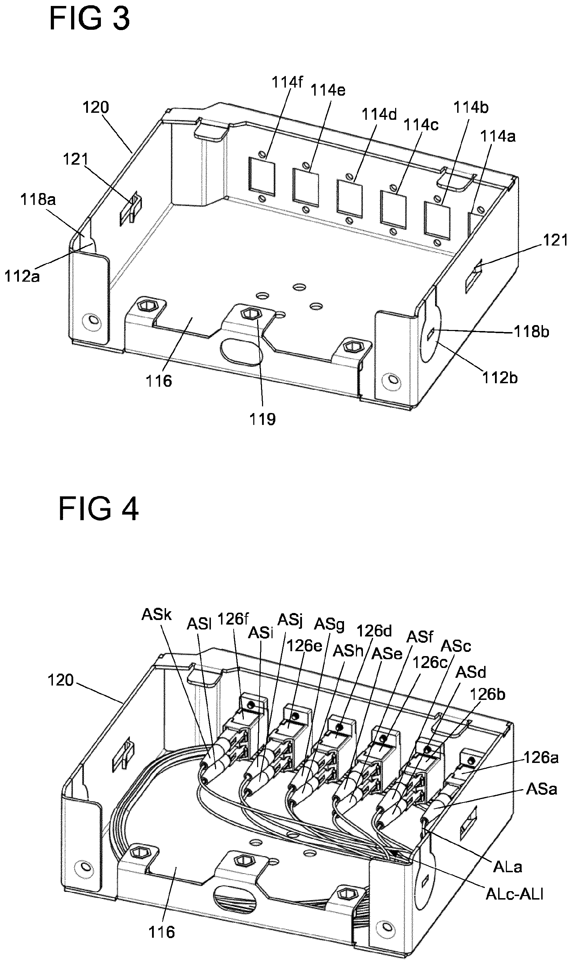

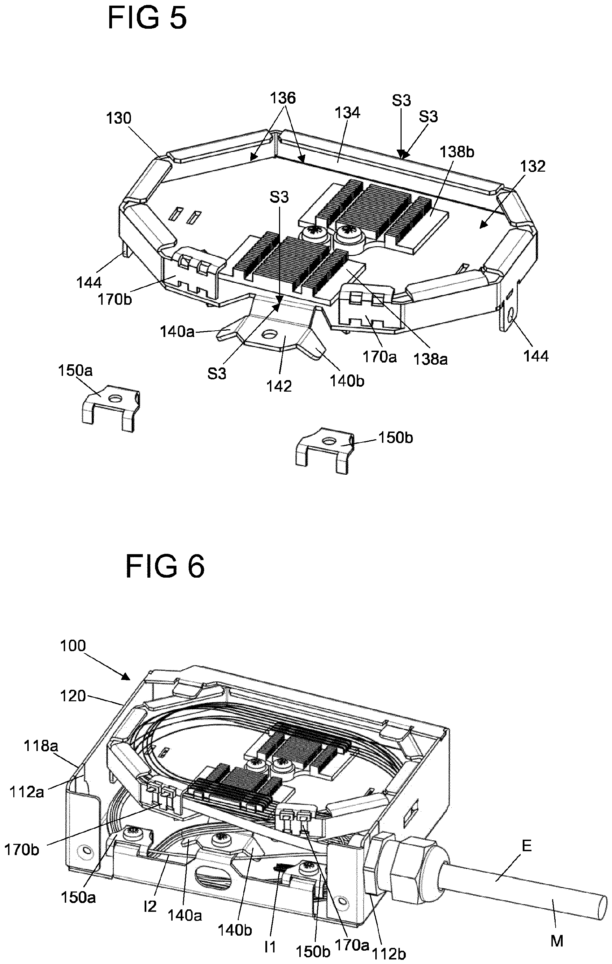

Die Spleißablage 130 ist mit einem reversiblen Befestigungsmittel 160a, beispielsweise einer Schraube, an der Gehäusekassette 120 lösbar befestigt. Dazu weist die Spleißablage 130, wie in Fig. 5 gezeigt, einen Befestigungsbereich 142 auf, der auf eine Auflagelasche 119 an einer Seitenwand der Gehäusekassette 120, wie in Fig. 3 gezeigt, aufgelegt und verschraubt werden kann. Die Gehäusekassette 120 umfasst an verschiedenen Seiten zudem Seitenauflagen 121, wie in Fig. 3 gezeigt, die als zusätzliche Auflagen für die Spleißablage 130 dienen. Außerdem sind die Seitenauflagen 121 jeweils mit einer Steckaufnahme ausgebildet, die mit einer Stecklasche 144 der Spleißablage 130, wie in Fig. 5 gezeigt, ineinander greift. Die Verwendung von nur einem Befestigungsmittel 160a zur Befestigung der Spleißablage 130 begünstigt eine einfache Handhabung des Spleißverteilers 100. Gleichzeitig begünstigt die Bereitstellung einer Mehrpunktauflage, beispielsweise einer Dreipunktauflage, mit den zusätzlichen Seitenauflagen 121 eine mechanische Stabilität des Spleißverteilers 100. Die Spleißablage 130 begünstigt mittels der Stecklaschen 144 zudem eine Verstrebung der Gehäusekassette 120. Zudem bieten die Stecklaschen 144 zusammen mit den Seitenauflagen 121 eine Führung beim Einsetzen der Spleißablage 130 in die Gehäusekassette 120.

Zur Montage und zum Verlegen der Lichtwellenleiter kann die Spleißablage 130 beispielsweise von der Gehäusekassette 120 getrennt werden. Hierdurch ist besonders das Verlegen der Anschlusslichtwellenleiter ALa-ALI in dem Bereich unterhalb der Spleißablage 130 vereinfacht. Nach Verlegen der Anschlusslichtwellenleiter ALa-ALI und Einsetzen der Spleißablage 130 kann die Spleißablage 130 mit dem Befestigungsmittel 160a in der Gehäusekassette 120 befestigt werden. Anschließend können, wie in Fig. 2 gezeigt, das Mantelrohr R mittels eines oder mehrerer Kabelbinder an einer zugeordneten Befestigungseinrichtung 170a, 170b der Spleißablage 130 befestigt und die Eingangslichtwellenleiter ELa-ELI verlegt werden.

Die Spleißablage 130 weist an ihrer Oberfläche 132 eine Umrandung 134 auf. Die Umrandung 134 dient als Führung für die auf der Oberseite 132 der Spleißablage 130 verlegten Lichtwellenleiter in horizontaler Richtung. Dadurch ist das Verlegen der Lichtwellenleiter vereinfacht und zugleich eine Quetschgefahr für die Lichtwellenleiter bei Einsetzen der Spleißablage 130 in die Gehäusekassette 120 nach Montage der Lichtwellenleiter reduziert. Wie in Fig. 1 gezeigt, ermöglicht die beschriebene Anordnung von Eingangsöffnungen 112a, 112b Anschlussöffnungen 114a-114f und Spleißablage 130, dass die Umrandung 134 die Oberfläche 132 der Spleißablage 130 nahezu vollständig umschließt.

Die Umrandung 134 überragt zudem einen Randbereich 136 der Oberseite 132 der Spleißablage 130. Dadurch bietet die Umrandung 134 eine Führung der darauf verlegten Lichtwellenleiter auch in vertikaler Richtung. Auf diese Weise ist das Verlegen der Lichtwellenleiter weiter vereinfacht. Zudem ist die Gefahr einer Beschädigung der Lichtwellenleiter bei einer Montage der Spleißablage 130 in der Gehäusekassette 120, einem Schließen der Gehäusekassette 120 mittels des Gehäusedeckels 122 oder späteren Wartungseingriffen an dem Spleißverteiler 100 weiter reduziert.

Die Spleißablage 130 umfasst außerdem angrenzend an den Befestigungsbereich 142 zwei Rampen 140a, 140b. Die Rampen 140a, 140b dienen der Führung von Lichtwellenleitern zwischen der Oberseite 132 der Spleißablage 130 und dem Bereich unterhalb der Spleißablage 130. Dadurch ist das Verlegen der Lichtwellenleiter weiter vereinfacht. Zudem lässt sich mittels der Rampen 140a, 140b eine Übergangskante vermeiden, wodurch eine Bruchgefahr für die Lichtwellenleiter verringert ist. In dem gezeigten Beispiel sind der Befestigungsbereich 142 und die Rampen 140a, 140b zudem gegenüber der Oberseite 132 der Spleißablage 130 abgesenkt angeordnet. Auf diese Weise ist beispielsweise die Gefahr eines Quetschens oder Verklemmens der Anschlusslichtwellenleiter ALa-ALI, etwa durch das Mantelrohr R, insbesondere bei einem Aufsetzen des Gehäusedeckels 122, reduziert. Die Absenkung der Rampen 140a, 140b gegenüber der Oberseite 132 beträgt beispielsweise zwischen 5 und 10 Millimetern.

Der Spleißverteiler 100 umfasst außerdem zwei Befestigungselemente 150a, 150b, die jeweils in einem Bereich nahe einer der Eingangsöffnungen 112a, 112b angeordnet sind. Die Befestigungselemente 150a, 150b sind zur Zugentlastung der Eingangslichtwellenleiter ELa-ELI vorgesehen. Zu diesem Zweck ist jedes der Befestigungselemente 150a, 150b mittels eines reversiblen Befestigungsmittels 160b, 160c, beispielsweise einer Schraube, lösbar an der Gehäusekassette 120 befestigt. Wie in Fig. 2 gezeigt, ist jedes der Befestigungselemente 150a, 150b zur Befestigung eines oder mehrerer Innenelemente 11, I2 des Eingangskabels E vorgesehen. Übliche Innenelemente von Glasfaserkabeln, die zur Zugentlastung befestigt werden können, umfassen beispielsweise Aramidgarn, Glasroving oder GFK-Elemente.

Die Befestigungselemente 150a, 150b dienen, bei dem dargestellten Ausführungsbeispiel, insbesondere dazu, jeweils ein Innenelement 11, I2 des Eingangskabels E zugfest zu dem Gehäuse 110 festzulegen. So ist über das Befestigungselement 150a bei der Anordnung gemäß Fig. 2 ein Innenelement I1 in Form eines Mantelgeflechts des Eingangskabels E klemmend zu dem Gehäuse 110 festgelegt. Über das Befestigungselement 150b ist demgegenüber ein auf Zug belastbares Innenelement I2 in Form eines Faserelements, zum Beispiel einer in dem Eingangskabels E zur Zugentlastung eingefassten Glas- oder Kunststofffaser, zu dem Gehäuse 110 festgelegt.

Die Befestigungselemente 150a, 150b sind unterhalb der Oberseitenebene S1 der Spleißablage 130 und oberhalb eines Bodens 116 der Gehäusekassette 120 angeordnet. Die Anordnung unterhalb der Oberseitenebene S1 vereinfacht dabei das Verlegen der Eingangslichtwellenleiter ELa-ELI sowie die Montage der Spleißablage 130. Gleichzeitig begünstigt die Anordnung oberhalb des Bodens 116 ein Verlegen der Anschlusslichtwellenleiter ALa-ALI. Beispielsweise kann so ein Bereich zwischen dem Boden 116 und den Befestigungselementen 150a, 150b in der Gehäusekassette 122 von Montageelementen frei gehalten werden, die ein Verlegen der Anschlusslichtwellenleiter ALa-ALI behindern könnten. In einigen Beispielen umfassen die Befestigungsmittel 160b, 160c jeweils eine Schraube und eine Blindnietmutter. Durch die Verwendung von Blindnietmuttern in dem Bereich zwischen dem Boden 116 und den Befestigungselementen 150a, 150b ist dabei die Gefahr einer Beschädigung von in diesem Bereich verlegten Lichtwellenleitern durch die Schrauben 160b, 160c reduziert.

Der Spleißverteiler 100 umfasst zwei Eingangsöffnungen 112a, 112b an entgegengesetzten Seiten der Gehäusekassette 122. Dies gestattet eine Zuführung des Eingangskabels E wahlweise aus verschiedenen Richtungen. Ein solches Zuführen wahlweise aus entgegengesetzten Richtungen ist bei dem Spleißverteiler 100 zudem durch eine zumindest im wesentlichen symmetrische Anordnung und Ausgestaltung der Befestigungselemente 150a, 150b und der Spleißablage 130 einschließlich der Rampen 140a, 140b in Bezug auf eine Gehäuseebenen S2 zwischen den Eingangsöffnungen 112a, 112b begünstigt. Bei einer von dem gezeigten Beispiel abweichenden Zuführung des Eingangskabels E durch die Eingangsöffnung 112b können beispielsweise sowohl die Eingangslichtwellenleiter ELa-ELI als auch die Anschlusslichtwellenleiter ALa-ALI in Schleifen von umgekehrter Richtung verlegt werden. Dabei können die Enden der Anschlusslichtwellenleiter ALa-ALI beispielsweise über die Rampe 140a zwischen der Oberseite 132 und dem Bereich unterhalb der Spleißablage 130 geführt werden. Zudem ist in einigen Beispielen des Spleißverteilers 100 jede der Eingangsöffnungen 112a, 112b mit einem Verschluss 118a, 118b versehen. Ein Benutzer des Spleißverteilers 100 kann dabei im Einzelfall zwischen einer Zuführung des Eingangskabels E durch die Eingangsöffnung 112a oder die gegenüberliegende Eingangsöffnung 112b wählen und nur an der gewählten Eingangsöffnung den entsprechenden Verschluss 118a, 118b entfernen. Ein Belassen des Verschlusses 118a, 118b an der jeweils nicht genutzten Eingangsöffnung 112a, 112b erhöht dabei einen durch das Gehäuse 110 gewährten Schutz.

Fig. 3 zeigt eine schematische Darstellung einer Gehäusekassette 120 eines Spleißverteilers 100 wie vorangehend beschrieben. Erkennbar sind in Fig. 3 die Anschlussöffnungen 114a-114f, die in einem unteren Bereich der Gehäusekassette 120 angeordnet sind. Zudem ist in Fig. 3 erkennbar, dass sich in dem Bereich zwischen dem Boden 116 und einem Befestigungsbereich für die Befestigungselemente 150a, 150b ein von Montageelementen freier Bereich befindet, was ein Verlegen von Anschlusslichtwellenleitern in der Gehäusekassette 120 begünstigt. Ferner ist an der dargestellten Gehäusekassette 120 jede der Eingangsöffnungen 112a, 112b mittels eines Verschlusses 118a, 118b verschlossen.

Fig. 4 zeigt eine schematische Ansicht der Gehäusekassette 120 aus Fig. 3. Abweichend von der Darstellung in Fig. 3 sind bei dem in Fig. 4 gezeigten Beispiel die Anschlussöffnungen 114a-114f jeweils mit einer Steckbuchse 126a-126f versehen. Zudem sind an jeder der Steckbuchsen 126a-126f zwei Anschlusslichtwellenleiter in Form von sogenannten Pigtails ALa-ALI angeschlossen. Jeder der Anschlusslichtwellenleiter ALa-ALI ist dabei an einem Ende mit einem Stecker ASa-ASI vorkonfektioniert. Die Anschlusslichtwellenleiter ALa-ALI sind auf dem Boden 116 zwischen den Seitenwänden der Gehäusekassette 120 verlegt.

Fig. 5 zeigt eine schematische Darstellung einer Spleißablage 130 sowie zweier Befestigungselemente 150a, 150b eines Spleißverteilers 100 wie vorangehend beschrieben. Die Spleißablage 130 ist bezüglich einer Mittelebene S3 zumindest im Wesentlichen symmetrisch ausgebildet. Zudem sind auf der Oberseite 132 der Spleißablage 130 zwei Spleißhalter 138a, 138b angeordnet. Fig. 5 zeigt zudem die Umrandung 134 der Spleißablage 130, die die Oberseite 132 nahezu vollständig umgibt und einen Randbereich 136 der Oberseite 132 teilweise überragt.

Fig. 6 zeigt einen Spleißverteiler 100 gemäß einem weiteren Beispiel. Der Spleißverteiler 100 aus Fig. 6 entspricht im Wesentlichen dem in Fig. 2 gezeigten Beispiel. Abweichend von dem Beispiel aus Fig. 2 ist jedoch bei dem Spleißverteiler 100 aus Fig. 6 das Eingangskabel E nicht durch die Eingangsöffnung 112a, sondern durch die gegenüberliegende Eingangsöffnung 112b zugeführt. Dem entsprechend ist ein Verschluss der Eingangsöffnung 112b entfernt, während an der Eingangsöffnung 112a ein Verschluss 118a vorhanden ist.

Wie im Zusammenhang mit Fig. 2 beschrieben, sind in dem Beispiel von Fig. 6 sowohl die Eingangslichtwellenleiter als auch die Anschlusslichtwellenleiter in einer dem Beispiel aus Fig. 2 entgegengesetzten Richtung in der Gehäusekassette 120 verlegt. Zudem sind gegenüber dem Beispiel aus Fig. 2 die verschiedenen Innenelemente I1, I2 des Eingangskabels E an dem jeweils anderen der Befestigungselemente 150a, 150b befestigt, und die Lichtwellenleiter sind über die Rampe 140a anstelle der Rampe 140b geführt.

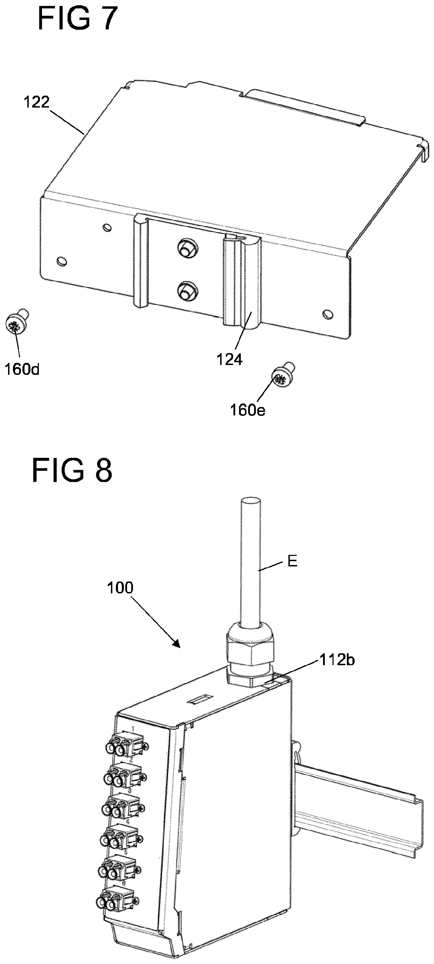

Fig. 7 zeigt eine schematische Darstellung eines Gehäusedeckels 122 und zweier Schrauben 160d, 160e zur lösbaren Befestigung des Deckels 122 an der Gehäusekassette 120 des Spleißverteilers 100, wie vorangehend beschrieben. Der Gehäusedeckel 122 weist an einer Rückseite eine Hutschienenaufnahme 124 auf. Diese ermöglicht eine Befestigung des Spleißverteilers 100 an einer Hutschiene, wie sie beispielsweise in der Automatisierungstechnik verbreitet sind. Andere Beispiele des Spleißverteilers 100 umfassen dagegen weitere oder andere Mittel zur Befestigung des Spleißverteilers 100. Zudem sind in einigen Beispielen Mittel zur Befestigung des Spleißverteilers an anderen Seiten des Spleißverteilers, beispielsweise an einer oder mehreren Außenseiten der Gehäusekassette 120, angeordnet.

Fig. 8 zeigt eine schematische Darstellung eines Spleißverteilers 100 gemäß einem weiteren Beispiel. Der in Fig. 8 gezeigte Spleißverteiler 100 entspricht im Wesentlichen dem Spleißverteiler 100 aus Fig. 1. Abweichend von dem in Fig. 1 gezeigten Beispiel ist jedoch bei dem Spleißverteiler 100 aus Fig. 8 das Eingangskabel E durch die der Eingangsöffnung 112a gegenüberliegende Eingangsöffnung 112b zugeführt. Bezüglich einer solchen Zuführung des Eingangskabels E durch die Eingangsöffnung 112b gilt das im Zusammenhang mit Fig. 6 Gesagte entsprechend.

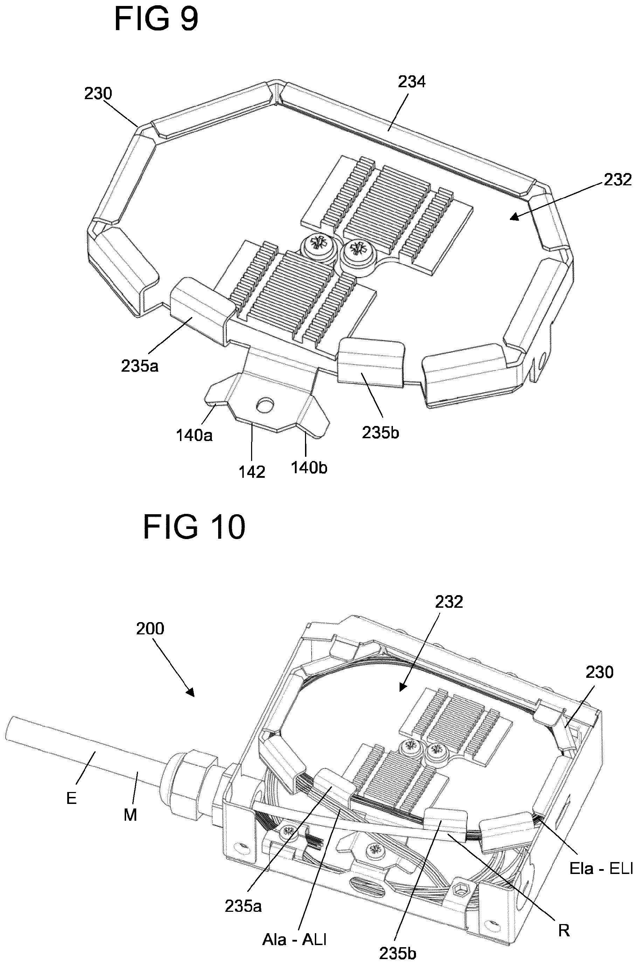

Fig. 9 zeigt eine schematische Darstellung eines weiteren Beispiels einer Spleißablage 230 zur Verwendung in einem Spleißverteiler der vorliegend beschriebenen Art. Die Spleißablage 230 kann beispielsweise anstelle der Spleißablage 130 verwendet werden. Sofern sich aus dem Nachfolgenden nichts anderes ergibt, gilt für die Spleißablage 230 das im Zusammenhang mit der Spleißablage 130 Gesagte entsprechend.

Ähnlich der Spleißablage 130 umfasst auch die Spleißablage 230 eine Oberseite 232 und eine Umrandung 234. Die Umrandung 234 der Spleißablage 230 umfasst dabei angrenzend an den Verbindungsbereich der Spleißablage 230 zwei Umrandungssegmente 235a, 235b, die gegenüber der übrigen Umrandung 234 nach innen versetzt angeordnet sind. Wie im Nachfolgenden mit Bezug auf Fig. 10 beschrieben, begünstigt die versetzte Anordnung der Umrandungssegmente 235a, 235b in einigen Beispielen eine Handhabung des Spleißverteilers.

Anders als die Spleißablage 130 weist die Spleißablage 230 zudem außerhalb des Verbindungsbereichs keinen symmetrischen Umriss auf. Die Form der Spleißablage 230 ist beispielsweise einem asymmetrischen Innenraum eines Spleißverteilergehäuses angepasst. Auf diese Weise wird beispielsweise ein verfügbarer Innenraum des Gehäuses effizienter genutzt und eine Handhabung des Spleißverteilers, beispielsweise bei einer Verlegung der Lichtwellenleiter, vereinfacht.

Fig. 10 zeigt einen Spleißverteiler 200 gemäß einem weiteren Beispiel. Der Spleißverteiler 200 sowie die dargestellte Konfiguration entsprechen weitgehend dem in Fig. 2 gezeigten Beispiel des Spleißverteilers 100. Sofern sich aus dem Nachfolgenden nichts anderes ergibt, gilt für den Spleißverteiler 200 das im Zusammenhang mit Fig. 2 Gesagte entsprechend.

Abweichend von dem Spleißverteiler 100 umfasst der Spleißverteiler 200 eine Spleißablage 230 wie im Zusammenhang mit Fig. 9 beschrieben. Die Form der Spleißablage 230 ist dabei einem asymmetrischen Innenraum des Gehäuses des Spleißverteilers 200 angepasst. Gleichzeitig ermöglicht die zumindest weitgehende Symmetrie der Spleißablage 230 im Verbindungsbereich nach wie vor eine Zuführung des Eingangskabels wahlweise aus einer von gegenüberliegenden Richtungen, wie im Zusammenhang mit Fign. 2 und 6 beschrieben.

Wie in Fig. 10 dargestellt, ermöglichen die nach innen versetzt angeordneten Umrandungssegmente 235a, 235b, das Mantelrohr R entlang einer Außenseite des Umrandungssegments 235b zu führen und anzubinden, beispielsweise mittels eines Kabelbinders. Damit lässt sich das Mantelrohr R aus einem Verlegebereich der Lichtwellenleiter auf der Oberseite 232 der Spleißablage 230 heraushalten, ohne dass dazu das Mantelrohr R gekürzt oder eine erheblich stärkere Krümmung von Kabel oder Lichtwellenleitern vorgenommen werden muss. Dies begünstigt sowohl eine Handhabung des Spleißverteilers 200 als auch einen Schutz der verlegten Lichtwellenleiter vor einem Verklemmen oder einer Beschädigung durch das Mantelrohr R.

In ähnlicher Weise ermöglicht das Umrandungssegment 235a, die Anschlusslichtwellenleiter ALa-ALI entlang einer Außenseite des Umrandungssegments 235a zu führen. Dies begünstigt eine getrennte Verlegung unterschiedlicher Abschnitte der Lichtwellenleiter, die beispielsweise in verschiedenen Abschnitten unterschiedliche Dicken aufweisen. So haben in einem Beispiel die Eingangslichtwellenleiter ELa-ELI bei Austritt aus dem Mantelrohr R eine Stärke von ungefähr 250 Mikrometer. Dagegen weist in dem Beispiel jeder der Anschlusslichtwellenleiter ALa-ALI in einem ummantelten Bereich eine Stärke von ungefähr 900 Mikrometer auf, wobei die Stärke durch Entfernen der Ummantelung nahe dem Verbindungsbereich reduziert ist, beispielsweise auf ungefähr 250 Mikrometer. Das Umrandungssegment 235a ermöglicht daher bei entsprechend gewähltem Entfernen der Ummantelung, die Anschlusslichtwellenleiter ALa-ALI in dem ummantelten Abschnitt anzubinden und gleichzeitig den ummantelten Abschnitt aus dem Verlegebereich von Lichtwellenleiterabschnitten mit reduzierter Stärke herauszuhalten.

### Bezugszeichenliste

- 100: Spleißverteiler
- 110: Gehäuse
- 112a, 112b: Eingangsöffnung
- 114a, 114b, ..., 114f: Anschlussöffnung
- 116: Boden
- 118a, 118b: Verschluss
- 119: Auflagelasche
- 120: Gehäusekassette
- 121: Seitenablage
- 122: Gehäusedeckel
- 124: Hutschienenaufnahme
- 126a, 126b, ..., 126f: Steckbuchse
- 130, 230: Spleißablage
- 132, 232: Oberseite
- 134, 234: Umrandung
- 235a, 235b: Umrandungssegment
- 136: Randbereich
- 138a, 138b: Spleißhalter
- 140a, 140b: Rampe
- 142: Befestigungsbereich
- 144: Stecklasche
- 150a, 150b: Befestigungselement
- 160a, 160b, ..., 160e: reversibles Befestigungsmittel
- 170a, 170b: Befestigungseinrichtung
- ALa, ALb, ..., ALI: Anschlusslichtwellenleiter
- ASa, ASb, ..., ASI: Stecker
- E: Eingangskabel
- ELa, ELb, ..., ELI: Eingangslichtwellenleiter
- H: Hutschiene
- I1, I2: Innenelement
- M: Ummantelung
- R: Mantelrohr
- S1: Oberseitenebene
- S2: Gehäuseebene
- S3: Mittelebene
- V: Verbindungsbereich

## Patentansprüche

1. Spleißverteiler (100), umfassend ein Gehäuse (110) mit wenigstens einer Eingangsöffnung (112a, 112b) zur Aufnahme eines Eingangskabels (E), das wenigstens einen Eingangslichtwellenleiter (ELa-ELI) umfasst, und wenigstens einer Anschlussöffnung (114a - 114f) zur Aufnahme wenigstens eines Anschlusslichtwellenleiters (ALa - ALI), der mit dem Eingangslichtwellenleiter (ELa-ELI) in dem Gehäuse (110) lichtleitend verbunden ist, sowie eine in dem Gehäuse (110) angeordnete Spleißablage (130), die zur Aufnahme eines Verbindungsbereichs (V) des Eingangslichtwellenleiters (ELa-ELI) und des Anschlusslichtwellenleiters (ALa - ALI) an einer Oberseite (132) der Spleißablage (130) vorgesehen ist, wobei die Eingangsöffnung (112a, 112b) zumindest teilweise oberhalb einer Oberseitenebene (S1) der Spleißablage (130) angeordnet ist, wobei die wenigstens eine Anschlussöffnung (114a-114f) unterhalb der Oberseitenebene (S1) der Spleißablage (130) angeordnet ist, wobei die Spleißablage (130) eine Befestigungseinrichtung (170a, 170b) zum Festlegen eines den wenigstens einen Eingangslichtwellenleiter (ELa-ELI) führenden Mantelrohrs (R) des Eingangskabels (E) aufweist, wobei die Spleißablage (130) mittels eines reversiblen Befestigungsmittels (160a) lösbar an dem Gehäuse (110) befestigt ist, wobei die Spleißablage (130) einen Befestigungsbereich (142) aufweist, der unterhalb der Oberseitenebene (S1) der Spleißablage (130) angeordnet ist und an dem das reversible Befestigungsmittel (160a) zur Befestigung an dem Gehäuse (110) angeordnet ist, und wobei wenigstens eine Rampe (140a, 140b) vorgesehen ist, die sich zwischen der Oberseitenebene (S1) der Spleißablage (130) und einem Bereich unterhalb der Spleißablage (130) erstreckt und die als Führung für den Anschlusslichtwellenleiter (ALa - ALI) zwischen der Oberseite (132) der Spleißablage (130) und dem Bereich unterhalb der Spleißablage (130) vorgesehen ist, wobei die Rampe (140a, 140b) als Teil der Spleißablage (130) ausgebildet ist, die Rampe (140a, 140b) an den Befestigungsbereich (142) angeformt ist und sich von dem unterhalb der Oberseitenebene (S1) angeordneten Befestigungsbereich (142) schräg zur Höhenrichtung nach unten, also von der Spleißablage (130) weg erstreckt.

2. Spleißverteiler (100) nach Anspruch 1, **dadurch gekennzeichnet, dass** die Spleißablage (130) an wenigstens 50 Prozent eines Umfangs der Spleißablage (130) eine Umrandung (134) aufweist, die einen Randbereich (136) der Oberseite (132) der Spleißablage (130) wenigstens teilweise überragt.

3. Spleißverteiler (100) nach Anspruch 1 oder 2, **gekennzeichnet durch** wenigstens einen Spleißhalter (138a, 138b), der an der Oberseite (132) der Spleißablage (130) angeordnet ist und der zur Aufnahme des Verbindungsbereichs (V) vorgesehen ist.

4. Spleißverteiler (100) nach einem der vorhergehenden Ansprüche, **gekennzeichnet durch** wenigstens eine Auflagelasche (119) und wenigstens zwei Seitenauflagen (121), die an verschiedenen Seiten in dem Gehäuse (110) angeordnet sind und die zur Auflage der Spleißablage (130) vorgesehen sind.

5. Spleißverteiler (100) nach einem der vorhergehenden Ansprüche, **gekennzeichnet durch** wenigstens ein Befestigungselement (150a, 150b), das in einem Bereich der Eingangsöffnung (112a, 112b) in dem Gehäuse (110) angeordnet ist und das zur Befestigung wenigstens eines Innenelements (I1, I2) des Eingangskabels (E) vorgesehen ist.

6. Spleißverteiler (100) nach Anspruch 5, **dadurch gekennzeichnet, dass** das wenigstens eine Befestigungselement (150a, 150b) unterhalb der Oberseitenebene (S1) der Spleißablage (130), aber von einem Boden (116) des Gehäuses (110) beabstandet angeordnet ist.

7. Spleißverteiler (100) nach einem der vorhergehenden Ansprüche, **dadurch gekennzeichnet, dass** das Gehäuse (110) wenigstens zwei Eingangsöffnungen (112a, 112b) aufweist, die an verschiedenen Seiten des Gehäuses (110) angeordnet sind, und der Spleißverteiler (100) wenigstens zwei Befestigungselemente (150a, 150b) und wenigstens zwei Rampen (140a, 140b) umfasst.

8. Spleißverteiler (100) nach Anspruch 7, **dadurch gekennzeichnet, dass** die Eingangsöffnungen (112a, 112b) an gegenüberliegenden Seiten des Gehäuses (110) angeordnet sind und die Befestigungselemente (150a, 150b) und die Rampen (140a, 140b) in Bezug auf eine Gehäuseebene (S2) zwischen den Eingangsöffnungen (112a, 112b) zumindest im Wesentlichen symmetrisch in dem Gehäuse (110) angeordnet sind.

9. Spleißverteiler (100) nach Anspruch 7 oder 8, **dadurch gekennzeichnet, dass** das Gehäuse (110) ferner an wenigstens einer der Eingangsöffnungen (112b) einen entfernbaren Verschluss (118) aufweist.

10. Baugruppe mit einem Spleißverteiler (100) nach einem der vorangehenden Ansprüche und einem Eingangskabel (E), das ein Mantelrohr (R) und wenigstens einen in dem Mantelrohr (R) geführten Eingangslichtwellenleiter (ELa-ELI) aufweist.

## Claims

1. Splice distributor (100) comprising a housing (110) with at least one input opening (112a, 112b), for receiving an input cable (E) which comprises at least one input optical waveguide (ELa-ELl), and with at least one connection opening (114a-114f), for receiving at least one connection optical waveguide (ALa-ALl) which is connected in a light-guiding manner to the input optical waveguide (ELa-ELl) in the housing (110), and a splice compartment (130) which is arranged in the housing (110) and which is intended for receiving a connecting region (V) of the input optical waveguide (ELa-ELl) and of the connection optical waveguide (ALa-ALl) at a top side (132) of the splice compartment (130), wherein the input opening (112a, 112b) is arranged at least partially above a top-side plane (S1) of the splice compartment (130), wherein the at least one connection opening (114a-114f) is arranged below the top-side plane (S1) of the splice compartment (130), wherein the splice compartment (130) has a fastening device (170a, 170b) for fixing a sheathing tube (R), guiding the at least one input optical waveguide (ELa-ELl), of the input cable (E), wherein the splice compartment (130) is releasably fastened to the housing (110) by means of a reversible fastening means (160a), wherein the splice compartment (130) has a fastening region (142) which is arranged below the top-side plane (S1) of the splice compartment (130) and on which is arranged the reversible fastening means (160a) for fastening to the housing (110), and wherein provision is made of at least one ramp (140a, 140b) which extends between the top-side plane (S1) of the splice compartment (130) and a region below the splice compartment (130) and which is intended as a guide for the connection optical waveguide (ALa-ALl) between the top side (132) of the splice compartment (130) and the region below the splice compartment (130), wherein the ramp (140a, 140b) is configured as part of the splice compartment (130), and the ramp (140a, 140b) is integrally formed on the fastening region (142) and extends from the fastening region (142), arranged below the top-side plane (S1), downwards obliquely to the height direction, that is to say away from the splice compartment (130).

2. Splice distributor (100) according to Claim 1, **characterized in that** the splice compartment (130) has a border (134) on at least 50 percent of a periphery of the splice compartment (130), said border at least partially projecting beyond an edge region (136) of the top side (132) of the splice compartment (130).

3. Splice distributor (100) according to Claim 1 or 2, **characterized by** at least one splice holder (138a, 138b) which is arranged on the top side (132) of the splice compartment (130) and is intended for receiving the connecting region (V).

4. Splice distributor (100) according to one of the preceding claims, **characterized by** at least one support tab (119) and at least two lateral supports (121), which are arranged on different sides in the housing (110) and are intended for supporting the splice compartment (130).

5. Splice distributor (100) according to one of the preceding claims, **characterized by** at least one fastening element (150a, 150b) which is arranged in the housing (110) in a region of the input opening (112a, 112b) and is intended for fastening at least one inner element (11, 12) of the input cable (E).

6. Splice distributor (100) according to Claim 5, **characterized in that** the at least one fastening element (150a, 150b) is arranged below the top-side plane (S1) of the splice compartment (130) but spaced apart from a base (116) of the housing (110).

7. Splice distributor (100) according to one of the preceding claims, **characterized in that** the housing (110) has at least two input openings (112a, 112b) which are arranged on different sides of the housing (110), and the splice distributor (100) comprises at least two fastening elements (150a, 150b) and at least two ramps (140a, 140b).

8. Splice distributor (100) according to Claim 7, **characterized in that** the input openings (112a, 112b) are arranged on opposite sides of the housing (110), and the fastening elements (150a, 150b) and the ramps (140a, 140b) are arranged in the housing (110) at least substantially symmetrically in relation to a housing plane (S2) between the input openings (112a, 112b).

9. Splice distributor (100) according to Claim 7 or 8, **characterized in that** the housing (110) furthermore has a removable closure (118) at at least one of the input openings (112b).

10. Assembly with a splice distributor (100) according to one of the preceding claims and with an input cable (E) which has a sheathing tube (R) and has at least one input optical waveguide (ELa-ELl) which is guided in the sheathing tube (R).

## Revendications

1. Distributeur à épissures (100), comprenant un boîtier (110) pourvu d'au moins une ouverture d'entrée (112a, 112b) pour recevoir un câble d'entrée (E) qui comprend au moins un guide d'ondes optiques d'entrée (ELa à ELl), et d'au moins une ouverture de raccordement (114a à 114f) pour recevoir au moins un guide d'ondes optiques de raccordement (ALa à ALl) qui est relié en acheminement de lumière au guide d'ondes optiques d'entrée (ELa à ELl) dans le boîtier (110), et une cassette d'épissures (130) disposée dans le boîtier (110) et qui est prévue pour recevoir une zone de liaison (V) du guide d'ondes optiques d'entrée (ELa à ELl) et du guide d'ondes optiques de raccordement (ALa à ALl) sur une face supérieure (132) de la cassette d'épissures (130), dans lequel l'ouverture d'entrée (112a, 112b) est disposée au moins partiellement au-dessus d'un plan de face supérieure (S1) de la cassette d'épissures (130), dans lequel ladite au moins une ouverture de raccordement (114a à 114f) est disposée au-dessous du plan de face supérieure (S1) de la cassette d'épissures (130), dans lequel la cassette d'épissures (130) présente un équipement de fixation (170a, 170b) pour immobiliser un tube fourreau (R) du câble d'entrée (E) acheminant ledit au moins un guide d'ondes optiques d'entrée (ELa à ELl), dans lequel la cassette d'épissures (130) est fixée de manière amovible au boîtier (110) à l'aide d'un moyen de fixation réversible (160a), dans lequel la cassette d'épissures (130) présente une zone de fixation (142) qui est disposée au-dessous du plan de face supérieure (S1) de la cassette d'épissures (130) et à laquelle est disposé le moyen de fixation réversible (160a) pour la fixation au boîtier (110), et dans lequel au moins une rampe (140a, 140b) est prévue qui s'étend entre le plan de face supérieure (S1) de la cassette d'épissures (130) et une zone au-dessous de la cassette d'épissures (130) et qui est prévue comme une glissière pour le guide d'ondes optiques de raccordement (ALa à ALl) entre la face supérieure (132) de la cassette d'épissures (130) et la zone au-dessous de la cassette d'épissures (130), dans lequel la rampe (140a, 140b) est réalisée comme une partie de la cassette d'épissures (130), la rampe (140a, 140b) est rapportée à la zone de fixation (142) et s'étend de la zone de fixation (142) disposée au-dessous du plan de face supérieure (S1) de manière oblique par rapport à la direction verticale vers le bas, donc en s'éloignant de la cassette d'épissures (130).

2. Distributeur à épissures (100) selon la revendication 1, **caractérisé en ce que** la cassette d'épissures (130) présente sur au moins 50 pour-cent d'une circonférence de la cassette d'épissures (130) une bordure (134) qui dépasse au moins partiellement d'une zone marginale (136) de la face supérieure (132) de la cassette d'épissures (130).

3. Distributeur à épissures (100) selon la revendication 1 ou 2, **caractérisé par** au moins un support d'épissures (138a, 138b) qui est disposé sur la face supérieure (132) de la cassette d'épissures (130) et qui est prévu pour recevoir la zone de liaison (V).

4. Distributeur à épissures (100) selon l'une quelconque des revendications précédentes, **caractérisé par** au moins une patte d'appui (119) et au moins deux points d'appui latéraux (121) qui sont disposés sur différents côtés du boîtier (110) et qui sont prévus pour l'appui de la cassette d'épissures (130).

5. Distributeur à épissures (100) selon l'une quelconque des revendications précédentes, **caractérisé par** au moins un élément de fixation (150a, 150b) qui est disposé au niveau de l'ouverture d'entrée (112a, 112b) dans le boîtier (110) et qui est prévu pour fixer au moins un élément intérieur (I1, 12) du câble d'entrée (E).

6. Distributeur à épissures (100) selon la revendication 5, **caractérisé en ce que** ledit au moins un élément de fixation (150a, 150b) est disposé au-dessous du plan de face supérieure (S1) de la cassette d'épissures (130) mais à distance d'un fond (116) du boîtier (110).

7. Distributeur à épissures (100) selon l'une quelconque des revendications précédentes, **caractérisé en ce que** le boîtier (110) présente au moins deux ouvertures d'entrée (112a, 112b) qui sont disposées sur différents côtés du boîtier (110), et le distributeur à épissures (100) comprend au moins deux éléments de fixation (150a, 150b) et au moins deux rampes (140a, 140b) .

8. Distributeur à épissures (100) selon la revendication 7, **caractérisé en ce que** les ouvertures d'entrée (112a, 112b) sont disposées sur des faces opposées du boîtier (110), et les éléments de fixation (150a, 150b) et les rampes (140a, 140b) sont disposés dans le boîtier (110) de manière au moins substantiellement symétrique par rapport à un plan de boîtier (S2) entre les ouvertures d'entrée (112a, 112b) .

9. Distributeur à épissures (100) selon la revendication 7 ou 8, **caractérisé en ce que** le boîtier (110) présente en outre une fermeture amovible (118) à au moins l'une des ouvertures d'entrée (112b).

10. Sous-ensemble comprenant un distributeur à épissures (100) selon l'une quelconque des revendications précédentes et un câble d'entrée (E) qui présente un tube fourreau (R) et au moins un guide d'ondes optiques d'entrée (ELa à ELl) acheminé dans le tube fourreau (R).
